# EUROPÄISCHE PATENTSCHRIFT

(11) **EP 0 879 752 B1**
(45) Veröffentlichungstag und Bekanntmachung des Hinweises auf die Patenterteilung: **19.09.2001**
(21) Anmeldenummer: 98108936.0
(22) Anmeldetag: 15.05.1998
(51) Int. Cl.: B62D 1/10, F16D 1/08

(54) **Lenkradbefestigung**
Steering wheel attachment
Fixation d'un volant de direction

(30) Priorität: 24.05.1997 DE 19721790
(43) Veröffentlichungstag der Anmeldung: 25.11.1998
(73) Patentinhaber: TRW Automotive Safety Systems GmbH & Co. KG, 63743 Aschaffenburg (DE)
(72) Erfinder: Frisch, Ralph, 63776 Mömbris (DE)
(74) Vertreter: Degwert, Hartmut, Dipl.-Phys.

(56) Entgegenhaltungen:
- EP-A- 0 685 379
- GB-A- 222 662

## Beschreibung

Die Erfindung betrifft eine Vorrichtung zur Befestigung eines Lenkrades an einer Lenksäule mit spielfreier Übertragung des Drehmoments und der Axialkräfte, wobei das Ende der Lenksäule und die Lenkradnabe im Eingriffsbereich für eine formschlüssige Übertragung des Drehmoments ausgebildet sind. Eine derartige Befestigungsvorrichtung wird in der Patentschrift EP-A-0 685 379 beschrieben.

Zur Befestigung des Lenkrades auf der Lenksäule ist das obere Lenksäulenende üblicherweise mit einem Konusteil, einer Kerbverzahnung und einem Außengewinde versehen, wobei die Lenkradnabe ebenfalls ein Konusteil und eine Kerbverzahnung besitzt. Das Lenkrad wird in der richtigen Winkelstellung auf die Lenksäule aufgesetzt und danach mittels einer zentralen Mutter axial derartig gegen die Lenksäule verspannt, daß die kraftschlüssige Verbindung über die Konusteile ausreicht, um die normalerweise auftretenden Drehmomente übertragen zu können. Die Kerbverzahnung, d.h. die formschlüssige Übertragung des Drehmoments kommt nur zum tragen, wenn die kraftschlüssige Verbindung beispielsweise bei einem Unfall überlastet wird, oder wenn sich die selbsthemmende Axialverschraubung lösen sollte.

Da keine mit vertretbarem Aufwand montierbare, formschlüssige Verbindung zur Übertragung des Drehmoments vom Lenkrad auf die Lenksäule völlig spielfrei ausgelegt werden kann, und da dieses Spiel von den herstellungsbedingten Toleranzen überlagert wird, verläßt man sich zur spielfreien Drehmomentübertragung zwischen Lenkrad und Lenksäule nicht auf die formschlüssige Verbindungskomponente, sondern auf die kraftschlüssige, die für sich genommen jedoch auch nicht als ausreichend angenommen wird und deswegen durch die formschlüssige Komponente ergänzt werden muß.

Die vorgenannte Befestigungsmethode setzt voraus, daß das Lenkrad im Bereich der Nabe von oben zugänglich ist, damit die Mutter auf die Lenksäule aufgeschraubt werden kann. Da immer mehr Fahrzeuge serienmäßig zumindest mit einem Fahrerairbag ausgestattet werden, der im Lenkrad untergebracht werden muß, kann das Airbagmodul im allgemeinen erst nach der Befestigung des Lenkrades auf der Lenksäule montiert werden. Das ist nicht nur verhältnismäßig aufwendig, sondern auch fertigungstechnisch nicht unproblematisch, weil das Anbringen des Airbags nicht beim Hersteller der Lenkräder und Airbags, sondern erst in der Endmontage des Kraftfahrzeuges erfolgen kann. Außerdem ist man mehr und mehr bestrebt, die Lenkradummantelung möglichst einstückig herzustellen, wobei keine Möglichkeit besteht, das Lenkrad in der zuvor beschriebenen Weise auf der Lenksäule zu befestigen.

Es besteht somit die Aufgabe, eine Lenkradbefestigung anzugeben, bei der man auf den zentralen Zugang von der Oberseite des Lenkrades her verzichten kann, ohne daß das Prinzip der überlagerten kraftschlüssigen und formschlüssigen Verbindung verlassen werden muß.

Zur Lösung dieser Aufgabe wird erfindungsgemäß vorgeschlagen, daß
- die Lenksäule im Eingriffsbereich mit einer umlaufenden, nutartigen Ausnehmung versehen ist,
- der Eingriffsbereich der Lenkradnabe einen feststehenden Teil und einen demgegenüber um eine zur Lenksäulenachse parallele Achse schwenkbaren Teil aufweist,
- der feststehende Teil formschlüssig mit der Lenksäule verbindbar ist,
- der schwenkbare Teil einen an die nutartige Ausnehmung angepaßten, sich über einen Teil des Umfangs der Ausnehmung erstreckenden Steg aufweist, und daß
- der schwenkbare Teil mittels einer im feststehenden Teil und im schwenkbaren Teil axial im wesentlichen unverschieblich gelagerten Bolzen-Mutter-Einheit in beiden Richtungen zwangsweise schwenkbar ist. um den Steg in bzw. außer Eingriff mit der Ausnehmung zu bringen.

Bei der erfindungsgemäßen Lenkradverbindung ist die Axialverspannung zur Ausbildung einer kraftschlüssigen Verbindung durch eine gleichwertige Radialverspannung ersetzt worden, zu deren Herstellung kein Zugang von der Oberseite des Lenkrades her erforderlich ist. Das Befestigen und Lösen des Lenkrades kann vielmehr von der Rückseite her erfolgen, indem die Radialverschraubung mittels eines Steckschlüssels betätigt wird. Damit steht die Oberseite des Lenkrades für die Anordnung des Airbags uneingeschränkt zur Verfügung, und es kann ohne weiteres eine zumindest auf der Oberseite einstückige Lenkradummantelung realisiert werden, wenn die Montage des Airbags von der Rückseite des Lenkrades her vorgesehen wird.

Vorteilhafte Abwandlungen und Ausgestaltungen des Erfindungsgedankens sind in den abhängigen Ansprüchen 2 bis 11 beschrieben. Weitere Einzelheiten werden anhand des in Figuren 1 bis 4 dargestellten Ausführungsbeispielen näher erläutert. Es zeigen:
- Fig. 1: den Ausschnitt einer Lenkradnabe mit geschlossener Radialverschraubung, gesehen von der Rückseite des Lenkrades.
- Fig. 2: den Ausschnitt einer Lenkradnabe mit geöffneter Radialverschraubung.
- Fig. 3: einen Schnitt längs der Linie A-A in Fig. 1.
- Fig. 4: einen Schnitt längs der Linie B-B in Fig. 1.

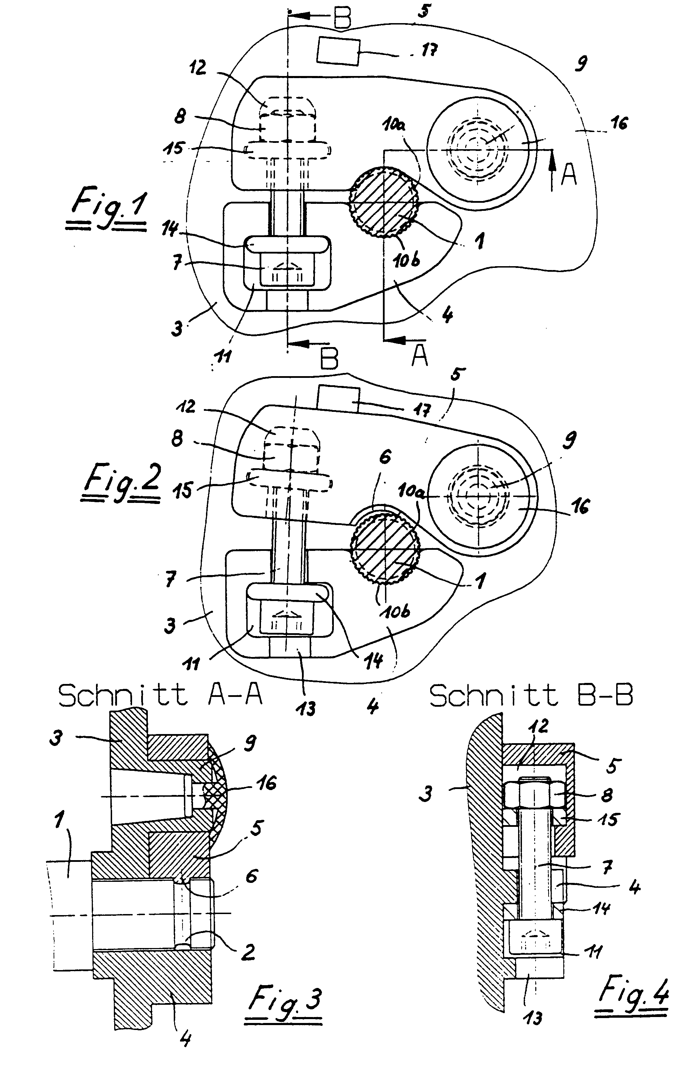

In den Figuren 1 bis 4 ist ausschnittweise der Eingriffsbereich einer Lenkradnabe 3 dargestellt, der außerdem einen feststehenden, mit der Lenkradnabe einstückig ausgebildeten Teil 4 sowie einen schwenkbaren Teil 5 aufweist, der um einen mit der Lenkradnabe ebenfalls einstückig ausgebildeten Drehzapfen 9 schwenkbar gelagert ist. Das Ende der Lenksäule 1 ist in an sich bekannter Weise mit einer Kerbverzahnung 10a sowie mit einer umlaufenden, nutartigen Ausnehmung 2 ausgestattet, wie insbesondere aus Fig. 3 ersichtlich. Der feststehende Teil 4 hat eine halbkreisförmige Ausnehmung mit Kerbverzahnung 10b. die bei der Montage in die Kerbverzahnung der Lenksäule 1 eingreift. Der schwenkbare Teil 5 besitzt einen sich über einen Teil des Umfangs der Ausnehmung 2 der Lenksäule 1 erstreckenden Steg 6 (siehe Fig. 2), der bei geschlossener Radialverschraubung in die Ausnehmung 2 eingreift und zusätzlich zu der durch die Radialverschraubung bewirkten kraftschlüssigen Verbindung ein in axialer Richtung wirkendes, formschlüssiges Verbindungselement bildet. Der schwenkbare Teil 5 ist auf dem Drehzapfen 9 durch eine Einsteckkappe 16 axial festgelegt. Die Bewegung des schwenkbaren Teils 5 ist in Schließrichtung durch Herstellung der Klemmverbindung und in Öffnungsrichtung durch einen Anschlag 17 begrenzt. Zur Betätigung der Radialverschraubung ist eine Bolzen-Mutter-Einheit 7, 8 vorgesehen, die einerseits in eine Ausnehmung 11 des feststehenden Teils 4 und andererseits in eine Ausnehmung 12 des schwenkbaren Teils 6 eingelegt ist, wobei die Ausnehmungen 11 und 12 spiegelbildlich zueinander angeordnet sind, so daß der Bolzen 7 mit seinem Kopf von außen in den feststehenden Teil 4 eingelegt werden kann, während der schwenkbare Teil 5 mit seiner Ausnehmung 12 nach dem Aufstecken auf den Drehzapfen 9 das andere Ende des Bolzens 7 mit der Mutter 8 übergreift, wodurch die Bolzen-Mutter-Einheit 7, 8 unverlierbar in den Teilen 4 und 5 gehalten wird. Zur Betätigung der Bolzen-Mutter-Einheit 7, 8 ist im feststehenden Teil 4 in Verlängerung der Bolzenachse noch eine Eingriffsbohrung 13 vorgesehen, durch die ein Steckschlüssel in den Kopf des Bolzens 7 eingesetzt werden kann. Außerdem sind noch Unterlegscheiben 14 und 15 vorgesehen, wobei letztere so ausgebildet werden kann, daß die Mutter 8 undrehbar gehalten wird, falls keine anderen Maßnahmen zur Festlegung der Mutter getroffen sind.

Die Bolzen-Mutter-Einheit 7, 8 ist überdies in den Ausnehmungen 11 und 12 bis auf das erforderliche Montagespiel axial soweit festgelegt, daß durch Drehung des Bolzens 7 nicht nur eine Schließbewegung, sondern auch eine zwangsweise Öffnungsbewegung des schwenkbaren Teils 5 bewirkt werden kann.

Mit der erfindungsgemäßen Vorrichtung ist eine auf der Rückseite des Lenkrades zu betätigende Lenkradbefestigung geschaffen, die allen sicherheitstechnischen Anforderungen entspricht und bei der insbesondere das Prinzip der spielfreien, primär kraftschlüssigen Verbindung mit überlagerter, formschlüssiger Komponente beibehalten worden ist.

## Patentansprüche

1. Vorrichtung zur Befestigung eines Lenkrades an einer Lenksäule (1) mit spielfreier Übertragung des Drehmoments und der Axialkräfte, wobei das Ende der Lenksäule und die Lenkradnabe (3) im Eingriffsbereich für eine formschlüssige Übertragung des Drehmoments ausgebildet sind, **dadurch gekennzeichnet, daß**
- die Lenksäule (1) im Eingriffsbereich mit einer umlaufenden, nutartigen Ausnehmung (2) versehen ist,
- der Eingriffsbereich der Lenkradnabe (3) einen feststehenden Teil (4) und einen demgegenüber um eine zur Lenksäulenachse parallele Achse schwenkbaren Teil (5) aufweist,
- der feststehende Teil (4) formschlüssig mit der Lenksäule (1) verbindbar ist,
- der schwenkbare Teil (5) einen an die nutartige Ausnehmung (2) angepaßten, sich über einen Teil des Umfangs der Ausnehmung (2) erstreckenden Steg (6) aufweist, und daß
- der schwenkbare Teil (5) mittels einer im feststehenden Teil (4) und im schwenkbaren Teil (5) axial im wesentlichen unverschieblich gelagerten Bolzen-Mutter-Einheit (7, 8) in beiden Richtungen zwangsweise schwenkbar ist, um den Steg (6) in bzw. außer Eingriff mit der Ausnehmung (2) zu bringen.

2. Vorrichtung nach Anspruch 1, **dadurch gekennzeichnet, daß** die Lenksäule (1) mittels der Bolzen-Mutter-Einheit (7, 8) zwischen feststehendem und schwenkbaren Teil (4, 5) derart einspannbar ist, daß zur Übertragung des Drehmoments und der Axialkräfte eine kraftschlüssige Verbindung gebildet wird, und daß die formschlüssig wirkenden Teile der Vorrichtung nur bei Überlastung der kraftschlüssig wirkenden Teile in die Kraftübertragung einbezogen werden.

3. Vorrichtung nach Anspruch 1 oder 2, **dadurch gekennzeichnet, daß** der feststehende Teil (4) einstückig mit der Lenkradnabe (3) ausgebildet ist.

4. Vorrichtung nach Anspruch 1 oder 2, **dadurch gekennzeichnet, daß** der schwenkbare Teil (5) auf einem mit der Lenkradnabe (3) einstückig ausgebildeten Drehzapfen (9) gelagert ist oder mit einem Zapfen in eine Bohrung der Lenkradnabe eingreift.

5. Vorrichtung nach Anspruch 3 oder 4, **dadurch gekennzeichnet, daß** die Lenkradnabe (3) gießtechnisch hergestellt ist.

6. Vorrichtung nach einem der Ansprüche 1 bis 5, **dadurch gekennzeichnet, daß** die Lenksäule (1) im Eingriffsbereich mit einer Kerbverzahnung (10a) versehen ist, und daß der feststehende Teil (4) eine darauf abgestimmte, sich über etwa den halben Umfang der Lenksäule (1) erstreckende Kerbverzahnung (10b) aufweist

7. Vorrichtung nach einem der Ansprüche 1 bis 6, **dadurch gekennzeichnet, daß** im feststehenden Teil (4) und im schwenkbaren Teil (5) Ausnehmungen (11, 12) für die unverlierbare Unterbringung der Bolzen-Mutter-Einheit (7, 8) ausgebildet sind, und daß wenigstens eine der Ausnehmungen (11, 12) in Verlängerung der Bolzenachse eine Eingriffsbohrung (13) aufweist.

8. Vorrichtung nach Anspruch 7, **dadurch gekennzeichnet, daß** die Bolzen-Mutter-Einheit (7,8) quer zur Bolzenachse in die Ausnehmung (11) des feststehenden Teils (4) einlegbar ist, und daß die Ausnehmung (12) im schwenkbaren Teil (5) dazu spiegelbildlich angeordnet ist, so daß die Bolzen-Mutter-Einheit (7, 8) nach dem Aufstecken und axialen Festlegen des schwenkbaren Teils (5) auf dem Drehzapfen (9) unverlierbar gehalten ist.

9. Vorrichtung nach einem der Ansprüche 1 bis 8, **dadurch gekennzeichnet, daß** zwischen Kopf des Bolzens (7) und schwenkbarem Teil (5) bzw. zwischen Mutter (8) und feststehendem Teil (4) je eine Unterlegscheibe (14, 15) angeordnet ist.

10. Vorrichtung nach einem der Ansprüche 1 bis 9, **dadurch gekennzeichnet, daß** der schwenkbare Teil (5) mittels einer Einsteckkappe (16) am Drehzapfen (9) axial festgelegt ist.

11. Vorrichtung nach einem der Ansprüche 1 bis 10, **dadurch gekennzeichnet, daß** die Öffnungsbewegung des schwenkbaren Teils (5) durch einen Anschlag (17) begrenzt ist.

## Claims

1. A device for fastening a steering wheel to a steering column (1), transmitting both torque and axial forces without play, the end of the steering column and the steering wheel hub (3) being designed in the region of engagement so as to ensure a form-fit transmission of the torque, **characterized in that**
- the steering column (1) is provided with a surrounding, groove-like recess (2) in the region of engagement,
- the region of engagement of the steering wheel hub (3) comprises a stationary part (4) and a part (5) being able to pivot with respect to the latter about an axis parallel to the axis of the steering column,
- the stationary part (4) can be attached to the steering wheel column (1) in a form-fitting manner,
- the pivoting part (5) comprises a ridge (6) that is adapted to the groove-like recess (2) and extends across at least part of the circumference of the recess (2), and in that
- the pivoting part (5) can be forcibly pivoted in both directions by means of a nut-and-bolt assembly (7, 8) mounted in the stationary part (4) and the pivoting part (5) substantially so as to be axially non-displaceable, for bringing the ridge (6) into engagement with the recess (2) and out of it, respectively.

2. The device according to claim 1, **characterized in that** the steering column (1) can be clamped by means of the nut-and-bolt assembly (7,8) between the stationary part (4) and the pivoting part (5) such as to constitute a force-fit connection for transmitting the torque and the axial forces, and in that the form-fit parts of the device only participate in the transmission of force when the force-fit parts are overloaded.

3. The device according to claim 1 or 2, **characterized in that** the stationary part (4) is formed integrally with the steering wheel hub (3).

4. The device according to claim 1 or 2, **characterized in that** the pivoting part (5) is mounted on a trunnion (9) formed integrally with the steering wheel hub (3) or engages with a pin into a hole of the steering wheel hub.

5. The device according to claim 3 or 4, **characterized in that** the steering wheel hub (3) is produced by means of casting technology.

6. The device according to any of the claims 1 to 5, **characterized in that** in the region of engagement the steering column (1) is provided with splines (10a) and in that the stationary part (4) is provided with splines (10b) adapted thereto and extending across about half of the circumference of the steering column (1).

7. The device according to any of the claims 1 to 6, **characterized in that** recesses (11, 12) are formed in the stationary part (4) and in the pivoting part (5) for captively accommodating the nut-and-bolt assembly (7, 8) and in that at least one of the recesses (11, 12) has an engagement hole (13) provided in extension of the axis of the bolt.

8. The device according to claim 7, **characterized in that** the nut-and-bolt assembly (7, 8) can be inserted into the recess (11) of the stationary part (4) in a direction transverse to the axis of the bolt (7) and in that the recess (12) in the pivoting part (5) is arranged mirror-inverted thereto, so that the nut-and-bolt assembly (7, 8) will be captively held on the trunnion (9) once the pivoting part (5) has been plugged-onto and axially secured.

9. The device according to any of the claims 1 to 8, **characterized in that** one washer (14, 15) each is provided between the head of the bolt (7) and the pivoting part (5), and between the nut (8) and the stationary part (4), respectively.

10. The device according to any of the claims 1 to 9, **characterized in that** the pivoting part (5) is axially secured on the trunnion (9) by means of a push-in cap (16).

11. The device according to any of the claims 1 to 10, **characterized in that** the opening motion of the pivoting part (5) is limited by a stop (17).

## Revendications

1. Dispositif de fixation d'un volant sur une colonne de direction (1) avec transmission, sans jeu, du couple et des forces axiales, l'extrémité de la colonne de direction et le moyeu (3) du volant étant réalisés dans la zone d'engagement pour assurer une transmission du couple par coopération de formes, **caractérisé en ce que**
- dans la zone d'engagement, la colonne de direction (1) est pourvue d'un évidement (2) périphérique en forme de gorge,
- la zone d'engagement du moyeu (3) du volant présente une partie (4) fixe et une partie (5) pivotante par rapport à celle-ci autour d'un axe parallèle à l'axe de la colonne de direction,
- la partie (4) fixe peut être reliée par coopération de formes à la colonne de direction (1),
- la partie (5) pivotante présente une nervure (6) adaptée à l'évidement (2) en forme de gorge et s'étendant sur une partie de la périphérie de l'évidement (2), et en ce que
- la partie (5) pivotante est susceptible d'être pivotée par force dans les deux directions au moyen d'une unité à boulon et écrou (7, 8) qui est montée axialement de manière sensiblement indéplaçable dans la partie (4) fixe et dans la partie (5) pivotante, afin d'engager la nervure (6) avec l'évidement (2) et de la dégager de celui-ci, respectivement.

2. Dispositif selon la revendication 1, **caractérisé en ce que** la colonne de direction (1) peut être serrée au moyen de l'unité à boulon et écrou (7, 8) entre les parties fixe et pivotante (4, 5) de telle manière qu'une liaison par coopération de forces est constituée pour transmettre le couple et les forces axiales, et en ce que les parties du dispositif qui agissent par coopération de formes ne participent à la transmission de la force qu'en cas de surcharge des parties qui agissent par coopération de forces.

3. Dispositif selon la revendication 1 ou 2, **caractérisé en ce que** la partie (4) fixe est réalisée d'un seul tenant avec le moyeu (3) du volant.

4. Dispositif selon la revendication 1 ou 2, **caractérisé en ce que** la partie (5) pivotante est montée sur un tourillon (9) réalisé d'un seul tenant avec le moyeu (3) du volant ou s'engage avec un tourillon dans un perçage du moyeu du volant.

5. Dispositif selon la revendication 3 ou 4, **caractérisé en ce que** le moyeu (3) du volant est fabriqué par la technique de fonderie.

6. Dispositif selon l'une quelconque des revendications 1 à 5, **caractérisé en ce que** dans la zone d'engagement, la colonne de direction (1) est pourvue d'une denture cannelée (10a) et en ce que la partie (4) fixe présente une denture cannelée (10b) adaptée à celle-ci, s'étendant sur approximativement la demi-circonférence de la colonne de direction (1).

7. Dispositif selon l'une quelconque des revendications 1 à 6, **caractérisé en ce que** dans la partie (4) fixe et dans la partie (5) pivotante sont réalisés des évidements (11, 12) pour le logement imperdable de l'unité à boulon et écrou (7, 8), et en ce qu'au moins un des évidements (11, 12) présente un perçage d'engagement (13) en prolongement de l'axe du boulon.

8. Dispositif selon la revendication 7, **caractérisé en ce que** l'unité à boulon et écrou (7, 8) peut être mise en place dans l'évidement (11) de la partie (4) fixe, transversalement à l'axe du boulon, et en ce que l'évidement (12) est disposé, de manière symétrique par rapport à un plan, dans la partie (5) pivotante, de sorte que l'unité à boulon et écrou (7, 8) est retenue de manière imperdable après avoir emboîté et fixé axialement la partie (5) pivotante sur le tourillon (9).

9. Dispositif selon l'une quelconque des revendications 1 à 8, **caractérisé en ce qu'**une rondelle (14, 15) respective est disposée entre la tête du boulon (7) et la partie (5) pivotante et entre l'écrou (8) et la partie (4) fixe.

10. Dispositif selon l'une quelconque des revendications 1 à 9, **caractérisé en ce que** la partie (5) pivotante est fixée axialement sur le tourillon (9) au moyen d'un capuchon d'emboîtement (16).

11. Dispositif selon l'une quelconque des revendications 1 à 10, **caractérisé en ce que** le mouvement d'ouverture de la partie (5) pivotante est limitée par une butée (17).
